# EUROPÄISCHE PATENTANMELDUNG

(11) **EP 4 541 601 A1**
(43) Veröffentlichungstag der Anmeldung: **23.04.2025**
(21) Anmeldenummer: 24207177.7
(22) Anmeldetag: 17.10.2024
(51) Int. Cl.: B42D 25/23, B42D 25/36, B42D 25/382, B42D 25/387, B42D 25/41, B42D 25/455, B42D 25/46, B41M 5/26

(54) **VERFAHREN ZUM ERZEUGEN EINER FLUORESZENZEIGENSCHAFT IN EINEM MATERIAL MIT EINEM LASER**

(30) Priorität: 17.10.2023 DE 102023128446
(71) Anmelder: Giesecke+Devrient ePayments GmbH, 81677 München (DE)
(72) Erfinder: FABIAN, Christina, 81677 München (DE); KOHL, Klaus, 81677 München (DE); RIEDL, Josef, 81677 München (DE)
(74) Vertreter: LKGLOBAL Lorenz & Kopf Patentanwalt Attorney at Law PartG mbB

(57) **Zusammenfassung**

Es wird ein Verfahren (100) zum Erzeugen einer zumindest teilweisen Fluoreszenzeigenschaft in einem Material (10) bereitgestellt. Das Verfahren (100) umfasst das Bereitstellen (110) des Materials (10), das Bereitstellen (120) eines Lasers (20), das Anordnen des Materials (130) in einem Strahlengang des Lasers (20), so dass der Laser (20) das Material selektiv abschnittsweise bestrahlen kann, und das zumindest abschnittsweises Bestrahlen (140) einer Oberfläche (11) des Materials (10) mit dem Laser (20). Das zumindest abschnittsweise Bestrahlen (140) der Oberfläche (11) des Materials (10) mit dem Laser (20) findet so lange statt, bis sich sichtbare Schmauchspuren (12) auf den bestrahlten Bereichen (13) der Oberfläche (11) des Materials (10) bilden, wodurch eine Fluoreszenzeigenschaft in den bestrahlten Bereichen (13) erzeugt wird.

## Beschreibung

### Technisches Gebiet

Die vorliegende Erfindung betrifft ein Verfahren zum Erzeugen einer Fluoreszenzeigenschaft mit einem Laser in einem Material.

### Technischer Hintergrund

Kartenförmige Datenträger wie Identitätskarten (z.B. Personalausweise und Führerscheine), Datenseiten in einem Reisepass, Bezahlkarten (beispielsweise Kreditkarten, Debitkarten etc.) aber auch Wertdokumente wie beispielsweise Banknoten verfügen oftmals über eine Vielzahl von Sicherheitsmerkmalen, um die Fälschungssicherheit zu erhöhen. Solche Sicherheitsmerkmale umfassen beispielsweise Hologramme, Laserkippbilder, Farbkippeffekte (z.B. optisch variable Farben), Sicherheitsfaden, Kontrastumkehreffekte, Mikroschriften, Guillochen, UV-Aufdrucke, 3D-Effekte, und fluoreszierende Merkmale, um nur einige Beispiele zu nennen. Insbesondere fluoreszierende Merkmale werden dabei üblicherweise durch das Einbringen fluoreszierender Pigmente, die beispielsweise in Druckfarben, Folien, Tinten, etc. enthalten sind, erreicht. Beispielsweise bestehen kartenförmige Datenträger wie Identitätsdokumente üblicherweise aus einem mehrschichtigen Aufbau, wobei verschieden opake und transparente Schicht zusammenlaminiert sind. Um einen fluoreszierenden Effekt, beispielsweise in Sicherheitsmerkmalen, zu erreichen, werden üblicherweise zwischen geeignete Schichten entsprechende Pigmente in den Schichtaufbau eingebracht und mit einlaminiert oder auf die Oberfläche aufgebracht. Es müssen somit zusätzliche Stoffe in oder auf das Material aufgebracht/eingebracht werden.

### Beschreibung

Es ist somit eine Aufgabe der vorliegenden Erfindung, einen zumindest teilweisen Fluoreszenzeffekt in einem Material zu erzeugen, ohne dass zusätzliche Stoffe in das Material eingebracht werden müssen.

Diese Aufgabe wird durch die Gegenstände der unabhängigen Anspräche gelöst. Beispielhafte Ausführungsformen ergeben sich aus den abhängigen Ansprüchen und der nachfolgenden Beschreibung.

Gemäß einem Aspekt wird ein Verfahren zum Erzeugen einer zumindest teilweisen Fluoreszenzeigenschaft in einem Material bereitgestellt. Das Verfahren umfasst das Bereitstellen des Materials, das Bereitstellen eines Lasers, das Anordnen des Materials in einem Strahlengang des Lasers, so dass der Laser das Material selektiv abschnittsweise bestrahlen kann, und das zumindest abschnittsweises Bestrahlen einer Oberfläche des Materials mit dem Laser. Das zumindest abschnittsweise Bestrahlen der Oberfläche des Materials mit dem Laser findet so lange statt, bis sich Schmauchspuren auf den bestrahlten Bereichen der Oberfläche des Materials bilden, wodurch eine Fluoreszenzeigenschaft in den bestrahlten Bereichen erzeugt wird.

Die Erfindung basiert auf der überraschenden Erkenntnis, dass das Bestrahlen bestimmter Materialen mit einem Laser unter bestimmten Bedingungen das entsprechende Material so verändert, dass dem Material eine Fluoreszenzeigenschaft inhärent vermittelt/eingebracht wird. Insbesondere kann eine solche Fluoreszenzeigenschaft beispielsweise in kartenförmige Datenträgern, wie Identitätskarten oder Bezahlkarten, als Sicherheitsmerkmal nützlich sein. Die Fluoreszenzeigenschaft wird dabei lediglich durch das Bestrahlen des Materials mit einem Laser erzeugt, ohne dass zusätzliche Stoffe wie entsprechende Farbpigmente eingebracht/aufgebracht werden müssen. Dadurch kann eine einfache Erzeugung einer Fluoreszenz, insbesondere auch, nachdem das Material, wie beispielsweise ein kartenförmiger Datenträger, bereits produziert ist, erreicht werden.

Im Allgemeinen wird unter Fluoreszenz die spontane Emission von Licht kurz nach der Anregung eines Materials durch Licht verstanden. Dabei sind die emittierten Photonen in der Regel energieärmer als die vorher absorbierten. Physikalische Systeme, bei denen Fluoreszenz auftritt, heißen Fluorophore. Die Fluoreszenz ist abzugrenzen von der Phosphoreszenz. Im Gegensatz zur Phosphoreszenz erfolgen bei der Fluoreszenz erlaubte Übergänge zwischen zwei elektronischen Zuständen. Die angeregten Zustände haben daher eine kurze Lebensdauer und die Fluoreszenz klingt nach kurzer Zeit ab. Es wird vermutet, dass das Bestrahlen des Materials mit einem Laser das Material chemisch so verändert, dass dieses eine Fluoreszenzeigenschaft aufweist. Insbesondere Moleküle mit konjugierten Doppelbindungen zeigen Fluoreszenz, da sich hier die Elektronen über mehrere Atome bewegen und daher leicht anzuregen sind. Es wird daher vermutet, dass das Material bei der Bestrahlung mit dem Laser unter den richtigen Bedingungen entsprechend chemisch verändert wird. Insbesondere CO2-Laser und Faserlaser haben sich als wirkungsvoll beim Erzeugen der Fluoreszenz erwiesen, wie weiter unter beschrieben wird. Allerdings sind grundsätzlich auch andere Laserarten denkbar.

Es hat sich gezeigt, dass ein gewisses Maß an sichtbaren Schmauchspuren auf der Materialoberfläche notwendig ist, um die Fluoreszenzeigenschaft zu erzeugen. Unter "Schmauchspuren" wird dabei ein gewisses Maß an gelblicher Verfärbung der Oberfläche verstanden, welches durch die eingebrachte Laserenergie und die damit einhergehenden Verbrennungsvorgänge an der Oberfläche entsteht. Dabei müssen diese Schmauchspuren nicht zwangsläufig mit dem bloßen Auge sichtbar sein, sondern es genügt beispielsweise auch, wenn diese mit Hilfsmitteln wie Mikroskopen oder ähnlichem sichtbar sind. Es hat sich jedoch gezeigt, dass die Fluoreszenzeigenschaft umso stärker ist, desto stärker die Schmauchspuren sind. Bei einer begrenzten Erzeugung von Schmauch kann dieser jedoch später wieder entfernt werden, so dass er bei Betrachtung unter Tageslicht nicht mehr sichtbar ist.

Unter einer zumindest teilweisen Fluoreszenzeigenschaft wird eine abschnittsweise Fluoreszenzeigenschaft auf dem Material verstanden, welche durch das abschnittsweise Bestrahlen der Oberfläche erreicht wird. Es kann beispielsweise ein bestimmtes Muster oder Motiv mit dem Laser bestrahlt/abgefahren werden, wodurch eine entsprechende Fluoreszenz dieses Musters erzeugt wird.

Zur Bestrahlung des Materials kann der Laser mit einer geeigneten Laserleistung betrieben werden und entsprechen über das Material bewegt werden (optional mit einer entsprechenden Pulsfrequenz des Lasers). Die Laserleistung und die "Abfahrgeschwindigkeit" der Oberfläche werden dabei so aufeinander abgestimmt, dass genügend Energie in das Material eingebracht wird, um die entsprechenden chemischen Veränderungen zu erzeugen, aber nicht zu viel Energie, welche das Material beschädigen oder zerstören würde. Die genauen Laserparameter hängen von dem bestrahlten Material und der Art des Lasers ab und können beispielsweise in Versuchen ermittelt werden. Im Allgemeinen sind die Laserparameter richtig gewählt, wenn sich ein gewisses, aber nicht zu großes Maß an Schmauchspuren auf der Oberfläche zeigt.

Gemäß einer Ausführungsform ist der Laser eines aus einem CO2-Laser und einem Faserlaser.

Diese Laserarten haben sich als besonders effektiv/nützlich zum Erzeugen der Fluoreszenzeigenschaft insbesondere bei kartenförmigen Datenträgern (bzw. bei üblicherweise verwendete Materialien in diesen kartenförmigen Datenträgern, wie weiter unten beschrieben) und damit als bevorzugt erwiesen.

Ein CO2-Laser (oder Kohlenstoffdioxidlaser), umgangssprachlich auch Kohlendioxidlaser, bezeichnet eine Laserklasse unterschiedlicher Bauformen aus der Gruppe der Gas-, Molekül- und Infrarotlaser im mittleren Infrarot. Sein Lasermedium ist Kohlenstoffdioxid mit einem 4-Niveau-System. CO2-Laser können grundsätzlich Ausgangsleistungen von bis zu 80 kW und Pulsenergien bis 100 kJ erreichen. Ein CO2-Laser produziert einen Strahl von Infrarotlicht mit einer Wellenlänge in den Bändern von 9,6 und 10,6 µm. CO2-Laser sind im Stand der Technik grundsätzlich bekannt, weshalb auf deren genau Funktionsweise hier nicht näher eingegangen wird.

Ein Faserlaser ist eine spezielle Form des Festkörperlasers. Der dotierte Kern einer Glasfaser bildet bei einem Faserlaser das aktive Medium. Es handelt sich also um einen Glaslaser mit Lichtwellenleiter-Eigenschaften. Die Laserstrahlung, welche durch die laseraktive Faser geleitet wird, erfährt aufgrund der großen Länge eine sehr hohe Verstärkung. Faserlaser werden im Allgemeinen optisch gepumpt, indem parallel zum Faserkern in dessen Mantel oder in diesen selbst Strahlung von Diodenlasern eingekoppelt wird. Doppelmantelfasern (engl. double clad fibers) erlauben höhere Leistungen; aus dem dicken Mantel gelangt die Pumpstrahlung verteilt in den aktiven Faserkern. Das häufigste Dotierungselement für den laseraktiven Faserkern ist Erbium, gefolgt von Ytterbium und Neodym für Hochleistungsanwendungen. Faserlaser verfügen über einzigartige Eigenschaften, so z.B. elektrisch-optische Wirkungsgrade bis über 30 %, herausragende Strahlqualität (mit M² < 1,1 beim Singlemode-Faserlaseraufbau, M² < 1,2 bei Doppelmantelfasern), hohe Lebensdauer (> 20.000 h) und einen kompakten, wartungsfreien und unempfindlichen Aufbau. Der Pulsbetrieb reicht bis in den fs-Bereich und kann eine hohe Spitzenintensität erreichen. Auch Faserlaser sind grundsätzlich bekannt, weshalb auf deren genau Funktionsweise nicht näher eingegangen wird.

Gemäß einer weiteren Ausführungsform wird, wenn der Laser ein CO2-Laser ist, der CO2-Laser mit einer Leistung zwischen 60 W und 100 W und einer Wellenlänge von 10,6 µm betrieben. Wenn der Laser ein Faserlaser ist, wird der Faserlaser mit einer Leistung zwischen 20 W und 30 W und einer Wellenlänge von 1064 nm betrieben.

Diese Betriebsdaten haben sich als besonders effektiv und damit als bevorzugt, insbesondere bei Anwendung des Verfahrens auf kartenförmige Datenträger (bzw. deren Materialien) erwiesen. Insbesondere bringen diese Betriebsparameter ausreichend Energie in das Material ein, um das Material entsprechend zu verändern, so dass die Fluoreszenzeigenschaft erzeugt wird, ohne das Material zu beschädigen. Jedoch sind diese Werte lediglich beispielhaft und es sind grundsätzlich auch andere Laserparameter denkbar. Die am meisten bevorzugten Parameter hängen insbesondere auch vom bestrahlten Material ab.

Gemäß einer weiteren Ausführungsform erfolgt das Bestrahlen der Oberfläche des Materials mit einem gepulsten Laser.

Insbesondere kann beispielsweise auch über die Pulsfrequenz die eingebrachte Energie angepasst werden. Ein Faserlaser kann beispielsweise mit einer Pulsfrequenz zwischen 25 kHz - 600 kHz mit voller Leistung oder 1 kHz bis 25 kHz mit linear reduzierter Leistung betrieben werden. Eine Pulsenergie von ca. 0,8 mJ ergibt sich bei 25 kHz Wiederholrate. Ein CO2-Laser kann beispielsweise mit einer Pulsfrequenz von bis zu 100 kHz betrieben werden. Grundsätzlich ist jedoch zu beachten, dass das Verfahren auch mit ungepulsten Lasern funktioniert. Ein gepulster Laser ermöglicht jedoch ein genaueres Steuern der eingebrachten Energiemenge.

Gemäß einer weiteren Ausführungsform umfasst das Bestrahlen der Oberfläche des Materials zumindest ein Bestrahlen der Oberfläche unter einem ersten Winkel, um eine erste Fluoreszenz zu erzeugen, und ein Bestrahlen der Oberfläche unter einem zweiten Winkel, um eine zweite Fluoreszenz zu erzeugen, um dadurch eine richtungsabhängige Fluoreszenzeigenschaft zu erzeugen, so dass die jeweilige Fluoreszenz nur unter dem jeweiligen Betrachtungswinkel sichtbar ist.

Insbesondere erzeugt die Bestrahlung eines Materials, bzw. dessen Oberfläche, unter einem Winkel eine Fluoreszenzeigenschaft, die bei Betrachtung unter diesem Winkel sichtbar ist. Es kann somit bei Bestrahlung unter verschiedenen Winkeln eine Art fluoreszierendes Kippbild erzeugt werden, welches unter verschiedenen Winkeln betrachtet unterschiedlich aussieht (Engl.: Multiple Laser Image, MLI). Beispielsweise könnte unter dem ersten Winkel der Vorname einer Person und unter dem zweiten Winkel der Nachname der Person als fluoreszierende Information sichtbar sein. Allerdings ist dies nur ein Beispiel und es können sämtliche denkbaren verschiedene Motive gewählt werden.

Auch ist denkbar, die Oberfläche des Materials unter mehr als einem Winkel zu bestrahlen, um eine Vielzahl von Informationen unter unterschiedlichen Blinkwinkeln zu ermöglichen. Eine derartige Konfiguration eignet sich besonders als Sicherheitsmerkmal, beispielsweise bei Identitätskarten/Dokumenten wie Personalausweisen, Mitarbeiterausweisen, Reisepässen, etc.

Gemäß einer weiteren Ausführungsform ist das Material ein kartenförmiges Material.

Der Begriff "kartenförmige Datenträger", wie hierin verwendet, umfasst sämtliche kartenförmigen Datenträger, welche irgendeine Form von Daten tragen. Mit "Daten" sind dabei nicht zwangsläufig nur digitale Daten, sondern auch Printdaten oder anderweitige Daten, beispielsweise in Text- oder Bildform, gemeint, wie beispielsweise Personenstandsdaten, wie sie auf einem Reisepass oder Personalausweis oder einem anderen Identitätsdokument vorhanden sind. Allerdings können derartige Datenträger anstatt dessen oder zusätzlich auch digitale Daten, die beispielsweise auf einem Kartenchip gespeicherte Daten (beispielsweise bei einer Bezahlkarte/Kreditkarte) umfassen.

Insbesondere bei Identitätsdokumenten sind oftmals eine Vielzahl von Sicherheitsmerkmalen vorgesehen. Fluoreszenzeffekte wurden dabei bisher durch Einbringen zusätzlicher Stoffe, die fluoreszierender Pigmente enthalten (beispielsweise in Druckfarben, Folien, Tinten, etc.) erreicht. Hierzu ist ein zusätzlicher Produktionsschritt notwendig. Das vorliegende Verfahren ermöglicht hingegen eine Produktion der kartenförmigen Datenträger ohne diesen zusätzlichen Produktionsschritt und ein Personalisieren nach Abschluss der Produktion. Die Erzeugung fluoreszierender Effekt mittels eines Lasers hat den Vorteil, dass kein zusätzlicher Produktionsschritt wie etwa das Einbringen/Aufbringen fluoreszierender Farben in bzw. auf die Karte erforderlich ist. Des Weiteren bietet das lasertechnische Erzeugen fluoreszierender Effekte den Vorteil der Designvielfalt, denn die fluoreszierenden Effekte können überall auf der Vorder- und/oder Rückseite erzeugt werden. Die fluoreszierenden Effekte können dabei sowohl vollflächig als auch nur abschnittsweise erzeugt werden.

Gemäß einer weiteren Ausführungsform weist das kartenförmige Material einen Schichtaufbau auf, der mehrere zusammenlaminierte Schichten umfasst.

Kartenkörper von z.B. kartenförmigen Datenträgern können beispielsweise einen Laminataufbau aufweisen, der sieben Folien umfasst (transparente Folie - transparente Folie - opake Folie - transparente Folie - opake Folie - transparente Folie - transparente Folie). Allerdings ist dies nur beispielhaft und andere Schichtaufbauten sind ebenfalls möglich. Der Schichtaufbau, üblicherweise in Form eines Bogens, kann mittels einer Laminierpresse verpresst werden. Anschließend kann der Bogen zu den einzelnen Kartenkörpern der kartenförmigen Datenträger geschnitten werden. Die einzelnen kartenförmigen Datenträger können gegebenenfalls in einem Fensterbereich gestanzt werden, sodass anschließend ein sogenannter Karteneinleger in den ausgestanzten Bereich eingesetzt werden kann.

Das vorliegende Verfahren kann sowohl auf den fertig produzierten Schichtaufbau angewendet werden, als auch auf einzelne Schichten des kartenförmigen Materials, bevor die einzelnen Schichten zusammenlaminiert werden.

Gemäß einer weiteren Ausführungsform ist das kartenförmige Material ein kartenförmiger Datenträger.

Bei einem solchen kartenförmigen Datenträger, aber auch bei jedem anderen geeigneten Datenträger oder Dokument, kann zudem optional beispielsweise auch ein schwarz-weißes Portrait mittels eines Lasers sowie eine Beschriftung in einem solchen kartenförmigen Datenträger erzeugt werden. Das Material zumindest einzelner Schichten weist dazu entsprechende Rußpartikel auf, welche den Laserstrahl stoppen und somit die Laserenergie "einfangen" und zu einer Verfärbung des Materials an dieser Stelle durch die Laserenergie führen. Das schwarz-weiße Portrait kann anschließend beispielsweise auch mittels DoD (Drop-on-Demand) farbig überdruckt werden, sodass ein farbiges Portrait entsteht (sogenanntes CLIP ID). Gegebenenfalls kann zudem auch ein Folienpatch aufgebracht werden, der Mikrolinsensicherheitselemente oder Mikrospiegelsicherheitselemente aufweist. Es ist jedoch zu beachten, dass die Erzeugung der Fluoreszenz grundsätlich unabhängig von dem Vorhandensein von Rußpartikeln ist und auch in Materialien ohne Rußpartikel funktioniert. Allerdings kann das offenbarte Verfahren zusätzlich zu Beschriftungen/Personalisierung mittels solcher Rußpartikel erfolgen, um eine weitere Personalisierung, beispielsweise mit Sicherheitsmerkmalen, zu ermöglichen.

Es ist beispielsweise auch denkbar, einem solchen Motiv oder Text zusätzlich einen fluoreszierenden Effekt mit dem vorliegenden Verfahren zu vermitteln, indem beispielsweise das Portrait mit dem Laser des vorliegenden Verfahrens "nachgezeichnet" wird. Dadurch wird die ohnehin schon gute Fälschungssicherheit noch weiter erhöht.

Gemäß einer weiteren Ausführungsform ist der kartenförmige Datenträger eines aus einer Identitätskarte, einer Datenseite eines Reisepasses, einem Führerschein, und einer Bezahlkarte.

Derartige kartenförmige Datenträger weisen oftmals eine Vielzahl von Sicherheitselementen auf. Das vorliegende Verfahren ermöglicht es, zusätzliche fluoreszierenden Sicherheitsmerkmale mit hoher Designvielfalt zu erzeugen. Insbesondere können die an und für sich fertig produzierten und personalisierten Datenträger in einer Endbearbeitung entsprechend mit fluoreszierenden Effekten versehen werden. Eine solche Endbearbeitung könnte beispielsweise auch getrennt von der eigentlichen Fertigung, z.B. beim Kunden, vorgenommen werden.

Gemäß einer weiteren Ausführungsform erfolgt das abschnittsweise Bestrahlen der Oberfläche gemäß einem Muster oder Motiv, um ein entsprechendes fluoreszierendes Motiv zu erzeugen.

Dazu kann der Laser das entsprechende Motiv beispielsweise mit entsprechenden Laserparametern "nachzeichnen", d.h. abfahren. Ein solches Motiv kann optional beispielsweise und ohne Einschränkung automatisiert in einem Computer geplant werden (z.B. anhand eines Fotos oder einer anderen Vorlage) und der Laser entsprechend angesteuert werden.

Gemäß einer weiteren Ausführungsform werden die beim Bestrahlen bestrahlten Abschnitte so gewählt, dass die erzeugte Fluoreszenzeigenschaft als Sicherheitsmerkmal dient.

Beispielsweise können die bestrahlten Bereiche entsprechend einem Foto des Inhabers oder eines anderen geeigneten Motivs ausgestaltet sein. Auch ist denkbar, dass Texte entsprechend gestaltet werden.

Gemäß einer weiteren Ausführungsform umfasst das Verfahren ferner das Entfernen der Schmauchspuren von der Oberfläche nach dem Bestrahlen.

Das Entfernen der Schmauchspuren kann beispielsweise durch Abreiben, Schleifen, Polieren, oder auf jede andere geeignete Art erfolgen. Dadurch ist die aufgeprägte Fluoreszenz (d.h. beispielsweise ein aufgeprägtes Motiv) nur bei entsprechendem Licht, das zur Anregung der Fluoreszenz dient, sichtbar, nicht jedoch ohne eine solche Anregung. Versuche haben gezeigt, dass die aufgeprägte/erzeugte Fluoreszenzeigenschaft auch nach dem Entfernen der Schmauchspuren erhalten bleibt.

Gemäß einer weiteren Ausführungsform umfasst das Material mindestens eines der folgenden Materialien: Opake und/oder transparente Polycarbonate (PC), veredelte Materialien, opakes und/oder transparentes Polyethylenterephthalat (PET), Acrylnitril-Butadien-Styrol-Copolymer (ABS), Bio Polycarbonate (PC), und Polyvinylcarbonat (PVC).

Bei diesen Materialen handelt es sich um einige der gängigsten Materialien für kartenförmige Datenträger (wie beispielsweise Identitätskarten, Bezahlkarten, etc.), die sich zudem experimentell als am besten geeignet für das Erzeugen/Vermitteln der Fluoreszenzeigenschaft erwiesen haben. Es sollte jedoch beachtet werden, dass diese Aufzählung lediglich beispielhafter Natur ist und grundsätzlich jedes geeignete Material, insbesondere Kunststoffmaterial, verwendet werden kann.

Unter veredelten Materialien sind dabei alle Materialien/Folien zu verstehen, die in irgendeiner Art und Weise optisch veredelt sind, beispielsweise durch das Einbringen (z.B. Extrudieren) von optisch aktiven Partikeln (z.B. Glitzereffekte), etc. Derartige optisch aktive Partikel beeinträchtigen das offenbarte Verfahren und dessen Wirkung nicht.

Gemäß einer weiteren Ausführungsform umfasst das Verfahren ferner ein Ausschneiden des bestrahlten Bereichs, so dass die Ränder des ausgeschnittenen bestrahlten Bereichs die Fluoreszenzeigenschaft aufweisen.

Beispielsweise könnte ein Material, insbesondere ein kartenförmiges Material (beispielsweise eines kartenförmigen Datenträgers) vollflächig bestrahlt werden oder beispielsweise auch nur in einem Randbereich (d.h. beispielsweise in einem Band, dass um einen beabsichtigten Rand des fertigen kartenförmigen Datenträgers läuft) zumindest teilweise mit dem Laser bestrahlt werden. Anschließend kann der Kartenkörper des kartenförmigen Datenträgers so ausgeschnitten werden, dass die Schnittkante in dem bestrahlten Bereich liegt. Dadurch wird eine zumindest teilweise Fluoreszenzeigenschaft des Rands des Materials erzeugt. Ferner ist auch denkbar, dass der bestrahlte Bereich selbst mit dem Laser ausgeschnitten wird, so dass durch das Ausschneiden mit dem Laser (und das damit einhergehende Bestrahlen der Schnittkante) der Schnittkante eine Fluoreszenzeigenschaft vermittelt wird. Unter bestrahlten Bereich kann dann entweder ein bereits zuvor innerhalb der ausgeschnittenen Fläche bestrahltes Material gemeint sein, oder aber auch ein Material, welches zuvor nicht bestrahlt wurde, so dass die bestrahlte Schnittkante die einzige Fluoreszenz aufweist und der ausgeschnittene Bereich dadurch zu einem bestrahlten Bereich wird.

Gemäß einer weiteren Ausführungsform ist das Material flächig ausgestaltet. Das Verfahren umfasst ferner das Einbringen des Materials als Einleger in einen kartenförmigen Datenträger.

Dadurch können beispielsweise flächige Einleger mit entsprechenden Fluoreszenzeigenschaften vorgefertigt werden, welche dann in kartenförmige Datenträger einlaminiert werden können. Das Material kann demnach beispielsweise eine einzelne Schicht aus einem entsprechenden Kunststoffmaterial (z.B. PC, veredelte Materialien (d.h. mit entsprechenden Füllstoffen/Veredelungspigmenten, wie weiter oben beschrieben), PET, ABS. Bio PC, PVC , etc.) sein, welches mit dem Verfahren behandelt wird, um eine Fluoreszenzeigenschaft aufzuprägen. Der entsprechende Einleger kann dann in den kartenförmigen Datenträger (welcher üblicherweise aus mehreren zusammenlaminierten Schichten besteht) mit einlaminiert werden, d.h. beispielsweise in eine entsprechende Ausnehmung in eine der Schichten (beispielsweise in einer Kernschicht, welche nur durch transparente Schichten bedeckt wird) eingelegt und mit einlaminiert werden. Der Einleger ist somit im Allgemeinen kleiner als der kartenförmige Datenträger. Auf diese Weise können beispielsweise vorgefertigte fluoreszierende Sicherheitsmerkmale oder andere fluoreszierende optische Effekte produziert werden, welche beim Laminieren des kartenförmigen Datenträgers nur noch mit einlaminiert werden müssen.

Gemäß einem weiteren Aspekt wird ein Dokument bereitgestellt, wobei dem Dokument mit dem oben beschriebenen Verfahren zumindest abschnittsweise eine Fluoreszenzeigenschaft vermittelt wurde. Ein solches Dokument kann beispielsweise ein kartenförmiger Datenträger, eine Banknote, ein Personalausweise, ein Reisepass, oder jedes andere Dokument sein. Beispielsweise können in einem solchen Dokument fluoreszierenden Sicherheitsmerkmale mit dem oben beschriebenen Verfahren erzeugt werden. Das Verfahren kann dabei gemäß jeder der oben beschriebenen Ausführungsformen durchgeführt werden.

Zusammengefasst zielt die vorliegende Erfindung darauf ab, z.B. in einer Endbearbeitung den an und für sich fertig produzierten und bereits personalisierten, z.B. und ohen Einschränkung, Kartenkörper mit einem CO2-Laser oder einem Faserlaser nachzubearbeiten, um auf diese Weise bei Beleuchtung mit UV-Licht erkennbare fluoreszierende Effekt in die Karte einzubringen. Die fluoreszierenden Effekte können großflächig, d.h. überall, auf der Vorder- und/oder Rückseite in die Karte eingebracht werden. Es wird vermutet, dass bei laminierten kartenförmigen Datenträgern insbesondere die beiden äußeren Folienlagen durch den Laser chemisch verändert werden (der genaue chemische Prozess ist den Erfindern bislang unklar). Die Erzeugung fluoreszierender Effekt mittels eines CO- oder Faserlasers hat den Vorteil, dass kein zusätzlicher Produktionsschritt wie etwa das Einbringen/Aufbringen fluoreszierender Farben in bzw. auf die Karte erforderlich ist. Des Weiteren bietet das lasertechnische Erzeugen fluoreszierender Effekte den Vorteil der Designvielfalt, denn die fluoreszierenden Effekte können überall auf der Vorder- und/oder Rückseite erzeugt werden.

### Kurzbeschreibung der Zeichnungen

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: zeigt einen beispielhaft und hochschematisch einen Aufbau einer Vorrichtung mit einem Laser, welche zum Durchführen eines Verfahrens zum Erzeugen einer Fluoreszenzeigenschaft verwendet werden kann.
- **Fig. 2**: zeigt ein Flussdiagramm eines Verfahrens zum Erzeugen einer Fluoreszenzeigenschaft in einem Material.
- **Fig. 3**: zeigt ein beispielhaftes auf einen kartenförmigen Datenträger aufgebrachtes fluoreszierendes Motiv ohne UV-Beleuchtung (Schmauchspuren) und mit UV-Beleuchtung (Fluoreszenz), wobei das Material Veredelungspigmente (z.B. OVI-Pigmente; Engl.: Optical Variable Image, OVI) umfasst.
- **Fig. 4**: zeigt ein beispielhaftes auf einen kartenförmigen Datenträger aufgebrachtes fluoreszierendes Motiv ohne UV-Beleuchtung (Schmauchspuren) und mit UV-Beleuchtung (Fluoreszenz) bei starker Schmauchspurbildung.
- **Fig. 5**: zeigt ein beispielhaftes auf einen kartenförmigen Datenträger aufgebrachtes fluoreszierendes Motiv ohne UV-Beleuchtung (Schmauchspuren) und mit UV-Beleuchtung (Fluoreszenz) bei schwacher Schmauchspurbildung.

### Detaillierte Beschreibung

Die Darstellungen in den Figuren sind schematisch und nicht maßstabsgetreu. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

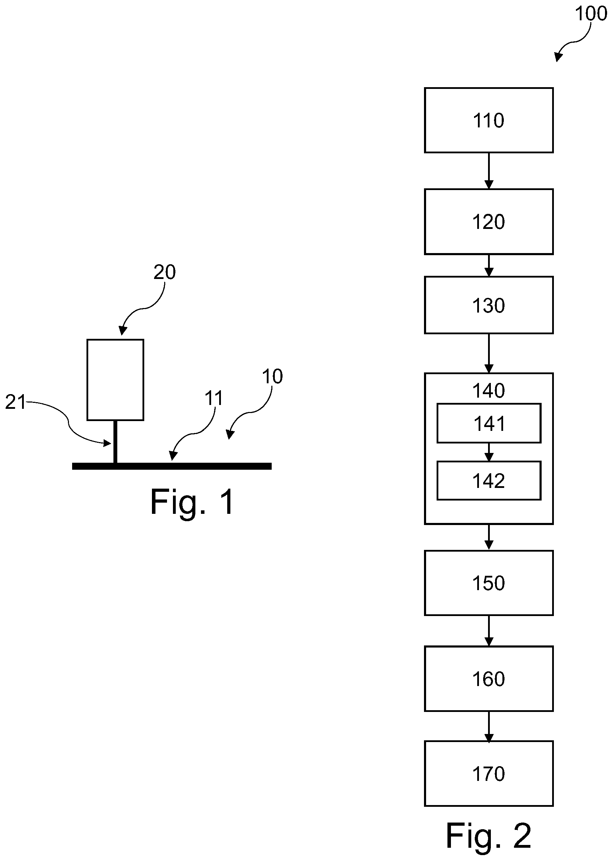

Fig. 1 zeigt hochschematisch einen Aufbau zum Durchführen des hierin offenbarten Verfahrens 100 (siehe Fig. 2). Ein Laser 20 ist über einem Material 10, hier beispielhaft in Form eines kartenförmigen Datenträgers 10, angeordnet, so dass der Laser 20 das Material 10 abschnittsweise selektiv bestrahlen kann, d.h. so dass ein Laserstrahl 21 positionsvariabel über das Material 10 geführt werden kann. Der Laser 10 kann beispielsweise an einer zweidimensionalen Führung (nicht dargestellt) angebracht sein, oder kann ein entsprechendes verstellbares Linsensystem (nicht dargestellt) umfassen, um den Auftreffpunkt des Laserstrahls 21 auf dem Material 10 zu variieren. Zudem kann sowohl der Laser 20 als auch eine eventuell vorhandene Führung bzw. ein Linsensystem oder jede andere geeignete Mechanik oder Elektronik zum Verändern des Auftreffpunkts des Laserstrahls 21 auf der Oberfläche 11 des Materials 10 mit einer Steuerung (nicht dargestellt) verbunden sein, welche die entsprechenden Komponenten entsprechend ansteuert. Die Steuerung kann beispielsweise die Laserparameter (z.B. Leistung, Pulsdauer, Wellenlänge, etc.), die Laserposition (inkl. eines Auftreffwinkels des Laserstrahls 21 auf der Oberfläche 11 des Materials 10), sowie die Geschwindigkeit der Bewegung des Laserstrahls 21 steuern, um das Verfahren der Fig. 2 durchzuführen.

Mit Bezug auf das Flussdiagramm in Fig. 2, und unter fortgesetzter Bezugnahme auf Fig. 1, wird nun ein Verfahren 100 zum Erzeugen einer Fluoreszenzeigenschaft in einem Material 10 beschrieben. Das Verfahren beginnt mit dem Bereitstellen 110 des Materials 10 und dem Bereitstellen 120 des Lasers 20. Die Schritte 110 und 120 können parallel stattfinden.

Das Material 10 kann beispielsweise ein kartenförmiges Material 10, wie etwa ein kartenförmiger Datenträger 10, der als Identitätsdokument, als Bezahlkarte, oder als jeder andere kartenförmiger Datenträger 10 ausgestaltet sein kann, sein. Im Folgenden wird das Verfahren 100 anhand eines kartenförmigen Datenträgers 10 beschrieben. Es sollte jedoch erkannt werden, dass das Material grundsätzlich an jedem geeigneten Material 10 bzw. Gegenstand durchgeführt werden kann.

Das Bereitstellen 110 des kartenförmigen Datenträgers 10 kann beispielsweise automatisiert auf einem Laufband erfolgen. Beispielsweise kann einen Ablegevorrichtung das zu bestrahlende Material auf dem Laufband ablegen. Das Laufband kann dann beispielsweise in gewissen zeitlichen Abständen zum Anordnen (Schritt 130) des kartenförmigen Datenträgers 10 in einem Strahlengang des Lasers 20, d.h. unter einem Bereich, den der Laserstrahl 21 (Fig. 1) bestrahlen kann, weiterlaufen, um den jeweiligen zu bestrahlenden kartenförmigen Datenträger 10 unter den Laser 20 bzw. einen Bereich, den der Laser 20 bestrahlen kann, zu bewegen. Dies ist jedoch nur ein Beispiel, und der kartenförmige Datenträger 10 kann in jeder geeigneten Art bereitgestellt werden.

Das Verfahren 100 kann in einer eigenständigen Vorrichtung stattfinden, oder die Vorrichtung zum Durchführen des Verfahrens (d.h. zumindest der Laser 20) kann auch Teil einer umfassenderen Produktionsanlage sein.

Der Laser 20 ist vorzugsweise ein CO2-Laser 20 oder ein Faserlaser 20. Diese Laserarten haben sich als besonders wirkungsvoll beim Erzeugen der Fluoreszenzeigenschaft erwiesen und wurden hierin weiter oben bereits beschrieben.

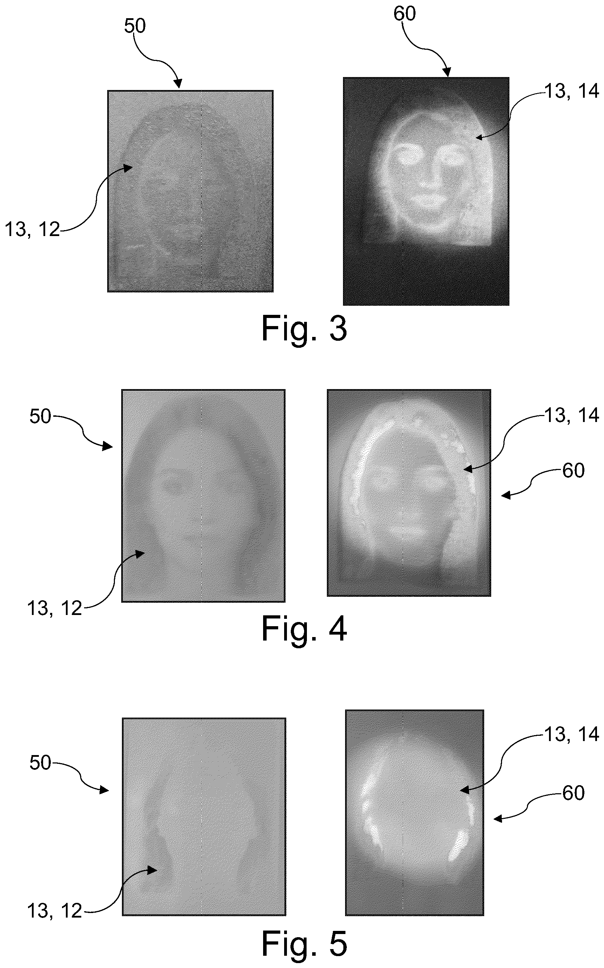

Das Verfahren 100 fährt fort mit dem zumindest abschnittsweisen Bestrahlen 140 der Oberfläche 11 des, in diesem Beispiel, kartenförmigen Datenträgers 10. Beispielsweise kann der Laser 20 dazu ein gewisses Muster oder Motiv (wie beispielsweise das Porträt, welches in den Fig. 3 bis 5 dargestellt ist) auf der Oberfläche 11 bestrahlen. Zudem kann jedoch beispielsweise auch ein Teil eines größeren Materials mit dem Laser selbst ausgeschnitten werden, wodurch der Rand des ausgeschnittenen Materials fluoreszierend wird. Es wird vermutet, dass durch das Bestrahlen der Oberfläche 11 (oder auch der Schnittkante, d.h. allgemein durch das Bestrahlen des Materials mit dem Laser) des kartenförmigen Datenträgers 10 (bzw. allgemein des Materials 10) das Material 10 chemisch so verändert, dass dieses eine Fluoreszenzeigenschaft aufweist. Insbesondere zeigen Moleküle mit konjugierten Doppelbindungen Fluoreszenz, da sich hier die Elektronen über mehrere Atome bewegen und daher leicht anzuregen sind. Es wird deshalb vermutet, dass bei der Bestrahlung mit dem Laser unter den richtigen Bedingungen einer derartige Veränderung des Materials 10 stattfindet.

Kartenförmige Datenträger 10 sind üblicherweise aus einem mehrschichtigen Aufbau laminiert. Bei derartigen laminierten Schichtaufbauten wird insbesondere vermutet, dass der Laser 20 die beiden äußeren Schichten chemisch so verändert, dass sich eine Fluoreszenzeigenschaft dieser Schichten ausbildet.

Insbesondere CO2-Laser und Faserlaser haben sich als wirkungsvoll beim Erzeugen der Fluoreszenzeigenschaft erwiesen. Allerdings sind grundsätzlich auch andere Laserarten denkbar.

Das Bestrahlen 140 findet so lange statt, bis sich sichtbare Schmauchspuren 12 (siehe Fig. 3 bis 5), welche sich beispielsweise in gelblichen Verfärbungen zeigen, bilden. Es hat sich gezeigt, dass die Fluoreszenzeigenschaft umso stärker ausfällt, umso stärker die Schmauchspuren 12 ausgebildet sind. Die Dauer der Bestrahlung und die Parameter des Lasers hängen insbesondere auch vom bestrahlten Material ab. Als besonders geeignet zum Erzeugen der Fluoreszenzeigenschaft haben sich insbesondere die folgenden Materialien erwiesen: opake und/oder transparente Polycarbonate (PC), veredelte Materialien (beispielsweise mit Veredelungspigmenten wie OVI-Pigmenten), opakes und/oder transparentes Polyethylenterephthalat (PET), Acrylnitril-Butadien-Styrol-Copolymer (ABS), Bio Polycarbonate (PC), und Polyvinylchlorid (PVC) . Allerdings sind grundsätzlich auch andere Materialien für die Verwendung mit dem hierin offenbarten Verfahren denkbar.

Die Laserparameter (Leistung, Pulsfrequenz, Wellenlänge, Pulsenergie, etc.) und insbesondere auch die nötige Bestrahlungsdauer hängen natürlich vom bestrahlten Material ab. Allerdings haben sich die folgenden Parameter als besonders wirkungsvoll erwiesen:
- CO2-Laser: Leistung: 60 W bis 80 W; Wellenlänge: 10,6 µm; Wiederholraten bis 100 kHz bei gepulstem Betrieb.
- Faserlaser: Leistung 20 W bis 30 W; Wellenlänge: 1064 nm; Wiederholraten: 25 kHz - 600 kHz mit voller Leistung, 1 kHz bis 25 kHz mit linear reduzierter Leistung bei gepulstem Betrieb; Pulsenergie: 0,8 mJ bei 25 kHz Wiederholrate.

Diese Parameter sind jedoch lediglich beispielhaft und andere Parameter können sich ebenso als wirksam erweisen. Insbesondere muss der Laser nicht zwangsläufig gepulst betrieben werden. Insgesamt wichtig ist die eingebrachte Energie, welche insbesondere durch die Laserleistung, die Bestrahlungsdauer und die Pulsfrequenz (bei gepulstem Betrieb, da die Pulsfrequenz die effektive Bestrahlungsdauer ebenfalls beeinflusst). Die Bestrahlungsdauer für das jeweilige Material kann insbesondere über den Grad an Schmauchspuren 12 gesteuert werden. Dabei ist sicherzustellen, dass sich erste Schmauchspuren 12 zeigen, die jedoch nicht zu stark, aber auch nicht zu schwach ausgebildet sein dürfen, da bei schwacher Ausbildung die Fluoreszenzeigenschaft nur unzureichend ausgebildet wird (siehe Fig. 5) und bei zu starker Ausbildung das Material 10 Schaden nehmen kann. Die Schmauchspuren müssen jedoch nicht zwangsläufig mit dem bloßen Auge sichtbar sein, sondern können auch auf andere Weise, beispielweise mit Hilfsmitteln wie Mikroskopen oder ähnlichem, nachgewiesen werden. Die Schmauchspuren 12 geben somit ein visuell wahrnehmbares Maß der eingebrachten Laserenergie bezüglich des jeweiligen Materials an.

Optional kann das zumindest abschnittsweise Bestrahlen 140 zunächst ein Bestrahlen 141 unter einem ersten Winkel und dann ein Bestrahlen 142 unter einem zweiten Winkel umfassen, um eine richtungsabhängige Fluoreszenzeigenschaft auszubilden. Dabei kann beispielsweise unter dem ersten Winkel ein erstes Motiv (beispielsweise ein Text- und/oder Graphikmotiv) bestrahlt werden und unter dem zweiten Winkel ein zweites Motiv. Durch die Bestrahlung unter einem Winkel bildet sich eine richtungsabhängige Fluoreszenz aus, so dass beispielsweise ein fluoreszierendes Kippbild erzeugt werden kann, welches sich besonders als Sicherheitsmerkmal eignet. Es ist auch denkbar, eine Bestrahlung unter mehr als zwei Winkeln vorzunehmen.

Optional kann das Verfahren 100 zudem ein Entfernen 150 der Schmauchspuren 12 nach dem Bestrahlen 140 umfassen. Die Schmauchspuren können beispielsweise ausgeschliffen, abgerieben, poliert oder anderweitig entfernt werden. Dadurch ist das bestrahlte Motiv 14 lediglich unter UV-Licht als Fluoreszenz sichtbar, aber nicht mehr im Tageslicht.

Zudem kann das Verfahren 100 optional ein Ausschneiden 160 des bestrahlten Bereichs 13 umfassen. Dabei kann der bestrahlte Bereich 13 insbesondere so konfiguriert sein, dass die Schnittkanten ebenfalls bestrahlt wurden (insbesondere auch, indem der bestrahlten Bereich 13 selbst durch den Laser ausgeschnitten wird). Dadurch kann ein Fluoreszenzeigenschaft in den Rändern erreicht werden.

Außerdem kann das Verfahren 100 optional ein Einbringen 170 des Materials 10 (wenn das Material nicht der kartenförmige Datenträger selbst ist) als Einleger in einen kartenförmigen Datenträger umfassen. In einer solchen Ausgestaltung ist das Material 10 somit ebenfalls flächig ausgestaltet, jedoch kleiner als der kartenförmige Datenträger. Beispielsweise kann das bestrahlte Material 10 lediglich eine Schicht umfassen und kleiner als der kartenförmige Datenträger sein. Der so vorbereitete Einleger kann dann beispielsweise vor dem Laminieren in eine Ausnehmung in einer inneren Schicht des kartenförmigen Datenträgers aufgenommen und mit einlaminiert werden.

Fig. 3 zeigt ein beispielhaftes fluoreszierendes Motiv 14, welches mit dem hierin beschriebenen Verfahren 100 erzeugt werden kann. Das bestrahlte Material weist in diesem Beispiel zudem Veredelungspigmente auf (z.B. OVI-Pigmente; Engl.: Optical Variable Image, OVI). Die Veredelungspigmente beeinflussen die erzeugte Fluoreszenzeigenschaft nicht. Dabei zeigt die linke Seite der Fig. 3 eine "Tageslichtansicht" 50, d.h. eine Ansicht, ohne UV-Anregungslicht. Dort sind die Schmauchspuren 12 an dem bestrahlten Bereich 13 deutlich sichtbar. Der bestrahlte Bereich 13 beschreibt dabei den Bereich, der das Motiv 14 bildet und durch den Laser 20 überfahren wurde. Die rechte Seite der Fig. 3 zeigt eine UV-Licht-Ansicht 60, d.h. eine Ansicht, in welcher das mit dem Verfahren 100 behandelte Material einem ultravioletten Anregungslicht ausgesetzt ist. Dabei ist deutlich sichtbar, dass in den bestrahlten Bereichen 13 eine Fluoreszenzeigenschaft in dem Material 10 erzeugt wurde.

Die Fig. 4 und 5 zeigen eine Gegenüberstellung der erzeugten Fluoreszenzeigenschaft mit wenig Schmauchspurbildung 12 (Fig. 5) gegenüber starker Schmauchspurbildung 12 (Fig. 4). Dabei ist deutlich sichtbar, dass die Fluoreszenzeigenschaft bei geringer Schmauchspurbildung 12, d.h. bei zu kurzer Bestrahlung und/oder Bestrahlung mit zu wenig Energie (insgesamt bei zu wenig eingebrachter Laserenergie für das jeweilige Material), gegenüber Fig. 4 deutlich schwächer ausgebildet ist.

Das hierin beschriebene Verfahren 100 bietet somit eine Möglichkeit, Materialien wie kartenförmige Datenträger 10 mit einer Fluoreszenzeigenschaft auszustatten, ohne dass zusätzliche Materialien wie fluoreszierende Farbpigmente eingebracht werden müssen. Der Fluoreszenzeffekt wird dem Material 10 vielmehr inhärent aufgeprägt. Dadurch wird eine große Designvielfalt ermöglicht und insbesondere auch die Personalisierung mit fluoreszierenden Effekten, nachdem die eigentliche Produktion des Materials 10, wie beispielsweise eines kartenförmigen Datenträgers 10, bereits abgeschlossen ist.

Ergänzend ist zudem noch darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: (kartenförmiges) Material, kartenförmiger Datenträger
- 11: Oberfläche (des Materials)
- 12: Schmauchspuren
- .13: bestrahlte Bereiche
- 14: fluoreszierendes Motiv
- 20: Laser, CO2-Laser, Faserlaser
- 21: Laserstrahl
- 50: Tageslichtansicht
- 60: UV-Licht-Ansicht

- 100: Verfahren
- 110: Bereitstellen des Materials
- 120: Bereitstellen des Lasers
- 130: Anordnen des Materials in einem Strahlengang des Lasers
- 140: Bestrahlen des Materials
- 141: Bestrahlen unter ersten Winkel
- 142: Bestrahlen unter zweitem Winkel
- 150: Entfernen von Schmauchspuren
- 160: Ausschneiden des bestrahlten Bereichs
- 170: Einbringen des Materials als Einleger in kartenförmigen Datenträger

## Patentansprüche

1. Verfahren (100) zum Erzeugen einer zumindest teilweisen Fluoreszenzeigenschaft in einem Material (10), das Verfahren umfassend:
Bereitstellen (110) des Materials (10);
Bereitstellen (120) eines Lasers (20);
Anordnen (130) des Materials (10) in einem Strahlengang des Lasers (20), so dass der Laser (20) das Material selektiv abschnittsweise bestrahlen kann; und
zumindest abschnittsweises Bestrahlen (140) einer Oberfläche (11) des Materials (10) mit dem Laser (20);
wobei das zumindest abschnittsweise Bestrahlen (140) der Oberfläche (11) des Materials (10) mit dem Laser (20) so lange stattfindet, bis sich sichtbare Schmauchspuren (12) auf den bestrahlten Bereichen (13) der Oberfläche (11) des Materials (10) bilden, wodurch eine Fluoreszenzeigenschaft in den bestrahlten Bereichen (13) erzeugt wird.

2. Verfahren (100) nach Anspruch 1, wobei der Laser (10) eines aus einem CO2-Laser (20) und einem Faserlaser (20) ist.

3. Verfahren (200) nach Anspruch 2, wobei, wenn der Laser (20) ein CO2-Laser (20) ist, der CO2-Laser (20) mit einer Leistung zwischen 60 W und 100 W und einer Wellenlänge von 10,6 µm betrieben wird; und
wobei, wenn der Laser (20) ein Faserlaser (20) ist, der Faserlaser (20) mit einer Leistung zwischen 20 W und 30 W und einer Wellenlänge von 1064 nm betrieben wird.

4. Verfahren (100) nach einem der vorstehenden Ansprüche, wobei das Bestrahlen (140) der Oberfläche (11) des Materials (10) mit einem gepulsten Laser (20) erfolgt.

5. Verfahren (100) nach einem der vorstehenden Ansprüche, wobei das Bestrahlen (140) der Oberfläche (11) des Materials (10) zumindest ein Bestrahlen (141) der Oberfläche (11) unter einem ersten Winkel, um eine erste Fluoreszenz zu erzeugen, und ein Bestrahlen (142) der Oberfläche (11) unter einem zweiten Winkel, um eine zweite Fluoreszenz zu erzeugen umfasst, um dadurch eine richtungsabhängige Fluoreszenzeigenschaft zu erzeugen, so dass die jeweilige Fluoreszenz nur unter dem jeweiligen Winkel sichtbar ist.

6. Verfahren (100) nach einem der vorstehenden Ansprüche, wobei das Material (10) ein kartenförmiges Material (10) ist.

7. Verfahren (100) nach Anspruch 6, wobei das kartenförmige Material (10) einen Schichtaufbau aufweist, der mehrere zusammenlaminierte Schichten umfasst.

8. Verfahren (100) nach Anspruch 6 oder 7, wobei das kartenförmige Material (10) ein kartenförmiger Datenträger (10) ist.

9. Verfahren (100) nach Anspruch 8, wobei der kartenförmige Datenträger (10) eines aus einer Identitätskarte, einer Datenseite eines Reisepasses, einem Führerschein, und einer Bezahlkarte ist.

10. Verfahren (100) nach einem der vorstehenden Ansprüche, wobei das abschnittsweise Bestrahlen (140) der Oberfläche (11) gemäß einem Muster oder Motiv erfolgt, um ein entsprechendes fluoreszierendes Motiv (14) zu erzeugen.

11. Verfahren (100) nach einem der vorstehenden Ansprüche, wobei die beim Bestrahlen (140) bestrahlten Abschnitte (13) so gewählt werden, dass die erzeugte Fluoreszenzeigenschaft als Sicherheitsmerkmal dient.

12. Verfahren (100) nach einem der vorstehenden Ansprüche, ferner umfassend das Entfernen (150) der Schmauchspuren (12) von der Oberfläche (11) nach dem Bestrahlen (140).

13. Verfahren (100) nach einem der vorstehenden Ansprüche, wobei das Material (10) mindestens eines der folgenden Materialien umfasst:
opake und/oder transparente Polycarbonate, PC;
veredelte Materialien;
opakes und/oder transparentes Polyethylenterephthalat, PET;
Acrylnitril-Butadien-Styrol-Copolymer, ABS;
Bio Polycarbonate, PC,; und
Polyvinylchlorid, PVC.

14. Verfahren (100) nach einem der vorstehenden Ansprüche, ferner umfassend ein Ausschneiden (160) des bestrahlten Bereichs (13), so dass die Ränder des ausgeschnittenen bestrahlten Bereichs die Fluoreszenzeigenschaft aufweisen.

15. Verfahren (100) nach einem der vorstehenden Ansprüche, wobei das Material (10) flächig ausgestaltet ist; und
wobei das Verfahren (100) ferner ein Einbringen (170) des Materials (10) als Einleger in einen kartenförmigen Datenträger (10) umfasst.
